# EUROPEAN PATENT APPLICATION

(11) **EP 4 778 783 A1**
(43) Date of publication of application: **22.07.2026**
(21) Application number: 26151941.7
(22) Date of filing: 15.01.2026
(51) Int. Cl.: B60N 2/56, B60R 7/10

(54) **CLOTHING CARE SYSTEM FOR VEHICLE**

(30) Priority: 20.01.2025 KR 20250008141
(71) Applicant: Daechang Seat Co., Ltd.-Dongtan, Hwaseong-si, Gyeonggi-do 18487 (KR)
(72) Inventor: CHO, Chan Ki, 25305 Pyeongchang-gun, Gangwon-do (KR); PARK, Gun Young, 17041 Yongin-si, Gyeonggi-do (KR); PARK, Mun Su, 18119 Osan-si, Gyeonggi-do (KR); PARK, Sang Young, 18283 Hwaseong-si, Gyeonggi-do (KR); JO, Yong Jun, 31461 Asan-si, Chungcheongnam-do (KR); SON, Hyo Jeong, 44260 Buk-gu, Ulsan (KR)
(74) Representative: Stöckeler, Ferdinand

(57) **Abstract**

Proposed is a clothing care system for a vehicle that can not only store clothing easily inside a vehicle but also care for the clothing efficiently. The clothing care system for a vehicle includes a hanger including a hanger part having an inlet formed in a body and an outlet formed in legs, and a hanger coupling portion provided around the inlet, and a seat including a backrest in which a blower having a first vent formed on a rear surface and a second vent formed on a front surface is provided, and a backrest coupling portion provided around the first vent and configured to be coupled to the hanger coupling portion.

## Description

### BACKGROUND

### Technical Field

The present disclosure relates to a clothing care system for a vehicle. More specifically, the present disclosure relates to a clothing care system for a vehicle that can care for clothing hung on a hanger that is hung on the rear surface of a seat of a vehicle.

### Description of the Related Art

In general, driving while wearing a suit jacket or a coat causes considerable inconvenience to a driver, so the driver often removes and stores clothing on the front passenger seat or the rear seat. Meanwhile, when clothing is carelessly stored on the front passenger seat or the rear seat, the clothing may be wrinkled or damaged, so the clothing is hung on a hanger and then hung on an assist handle of the vehicle for storage. However, in this case, there is a drawback that clothing hung on the assist handle obstructs the driver's view and another drawback that the hanger falls off the assist handle due to driving.

Korean Patent Application Publication No. 10-2019-0111449 discloses a clothing deodorizing device for a vehicle.

The clothing deodorizing device for a vehicle disclosed in the publication includes: an air-conditioning unit that forcibly supplies air toward a local area in the vehicle interior; a flow-path opening/closing adjustment unit that adjusts opening and closing of a flow path of the air-conditioning unit; a purification unit that removes odors from an article located in the local area; a control unit that controls operations of the air-conditioning unit, the flow-path opening/closing adjustment unit, and the purification unit; and a hanger part that is installed in the local area and on which clothing is hung.

The clothing deodorizing device for a vehicle has the problem that it lacks a sufficient structure for securing the hanger part to the local area, resulting in weak securing force, and also suffers from low airflow pressure because the airflow path leading to the hanger part is long.

### [Prior Art Document]

### [Patent Document]

(Patent Document 1) KR 10-2019-0111449 B1 (published on October 2, 2019)

### SUMMARY

An objective of the present disclosure is to provide a clothing care system for a vehicle that can not only store clothing easily inside a vehicle but also care for the clothing efficiently.

A clothing care system for a vehicle according to an embodiment includes: a hanger including a hanger part having an inlet formed in a body and an outlet formed in legs, and a hanger coupling portion provided around the inlet; and a seat including a backrest in which a blower having a first vent formed on a rear surface and a second vent formed on a front surface is provided, and a backrest coupling portion provided around the first vent and configured to be coupled to the hanger coupling portion.

Further, the first vent of the clothing care system for a vehicle according to an embodiment may be opened and closed by a plurality of blades installed in parallel in an up-down direction.

Further, the seat of the clothing care system for a vehicle according to an embodiment may further include a controller provided on a rear surface of the backrest and configured to control the plurality of blades.

Further, the hanger of the clothing care system for a vehicle according to an embodiment may further include: a sterilizing lamp provided on the leg; a heating wire provided inside the hanger part; and a power terminal provided on the body for supplying power and transmitting and receiving signals.

Further, a clothing care system for a vehicle according to another embodiment includes: a hanger including a hanger part having an inlet formed in a body and an outlet formed in legs, and a hanger coupling portion provided around the inlet; and a seat including a backrest in which a blower having a first vent formed on a rear surface and a second vent formed on a front surface is provided, and a backrest coupling portion provided around the first vent and configured to be coupled to the hanger coupling portion, wherein the hanger coupling portion of the hanger is formed to protrude, wherein the seat includes: a first window having a plurality of slats spaced apart in parallel in an up-down direction and installed in contact with the first vent; a second window having a plurality of slats spaced apart in parallel in the up-down direction, installed to be slidable in the up-down direction in surface contact with the first window, and having an inclined surface formed at an upper end to incline toward the first window; and an elastic member provided at a lower end of the second window, and wherein the first vent has: an open mode in which, when the hanger is coupled to the seat, the second window is slid downward by the hanger coupling portion and the first vent is opened; and a closed mode in which, when the hanger is separated from the seat, the second window is slid upward by the elastic member and the first vent is closed.

In the clothing care system for a vehicle according to an embodiment, the blower provided inside the backrest can supply air toward the front side and the rear side of the backrest. As a result, a rear-seat blowing effect and a ventilated-seat effect can be achieved, and the seat can be manufactured compactly without requiring two blowers, thereby reducing manufacturing costs.

Further, in the clothing care system for a vehicle according to an embodiment, the hanger is magnetically coupled to the seat. As a result, the hanger is firmly coupled and is easily attached and detached.

Further, the clothing care system for a vehicle according to an embodiment has an effect of conveniently and cleanly caring for clothing using air that is blown from the hanger, the heating wire provided inside the hanger, and the sterilizing lamp provided on the leg of the hanger.

Further, since the clothing care system for a vehicle according to an embodiment has a fragrance in the backrest, it is possible to remove odors of clothing hung on the hanger.

Further, the clothing care system for a vehicle according to an embodiment can prevent foreign substances from entering by closing the vents when it is not used.

Further, the clothing care system for a vehicle according to an embodiment can adjust the air volume of the blower using the controller.

Further, in the clothing care system for a vehicle according to an embodiment, the legs of the hanger are hinge-coupled to the body. As a result, the hanger separated from the seat can be straightened and conveniently stowed.

### BRIEF DESCRIPTION OF THE DRAWINGS

FIG. 1 is a perspective view of a clothing care system for a vehicle according to an embodiment;
FIG. 2 is an exploded view of the clothing care system for a vehicle according to an embodiment;
FIG. 3 is a cross-sectional view of a closed mode of the clothing care system for a vehicle according to an embodiment;
FIG. 4 is a cross-sectional view of an open mode of the clothing care system for a vehicle according to an embodiment;
FIG. 5 is a perspective view of a clothing care system for a vehicle according to another embodiment;
FIG. 6 is an exploded view of the clothing care system for a vehicle according to another embodiment;
FIG. 7 is a cross-sectional view of a closed mode of the clothing care system for a vehicle according to another embodiment; and
FIG. 8 is a cross-sectional view of an open mode of the clothing care system for a vehicle according to another embodiment.

### DETAILED DESCRIPTION

The advantages and features of the present disclosure, and methods of achieving them will be clear by referring to the exemplary embodiments that will be described hereafter in detail with reference to the accompanying drawings. However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims. Like reference numerals indicate the same components throughout the specification.

### Clothing Care System (10) For Vehicle According To An Embodiment

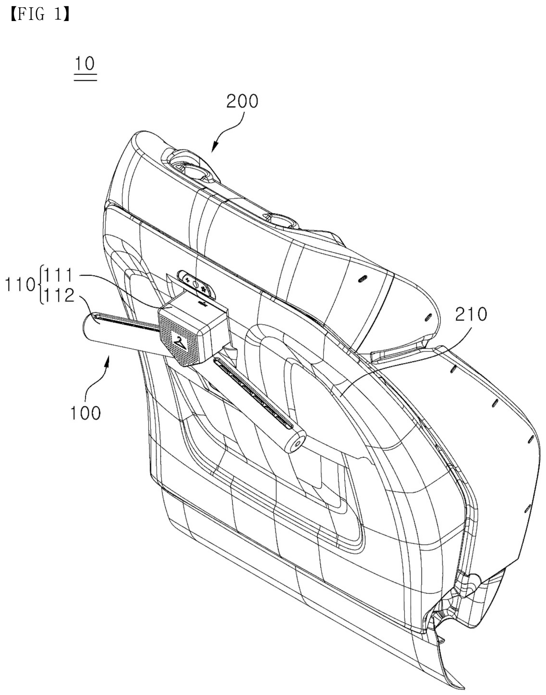

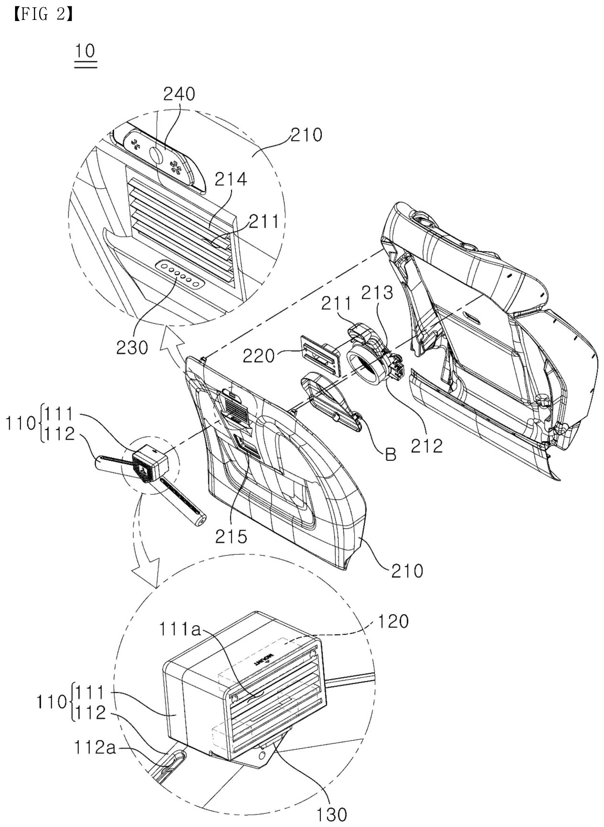

Referring to FIG. 1 that is a perspective view of a clothing care system 10 for a vehicle according to an embodiment (hereafter, referred to as "clothing care system for a vehicle") and FIG. 2 that is an exploded view of the clothing care system 10 for a vehicle, the clothing care system 10 for a vehicle includes a hanger 100 and a seat 200.

The hanger 100 is coupled to the rear surface of the seat 200 by a backrest coupling portion 220 to be described below, and includes a hanger part 110 and a hanger coupling portion 120.

The hanger part 110 has an inverted-V shape and is composed of a body 111 that corresponds to a central portion and legs 112 that correspond to a leg portion. Further, the legs 112 are hinge-coupled to be rotatable with respect to the body 111, so the hanger 100 can be stowed with minimized volume when it is not used.

An inlet 111a is formed on one side of the body 111 that is coupled to the rear surface of a backrest 210 to be described below, and an outlet 112a is formed at the lower portion or at the upper and lower portions of the leg 112.

The hanger coupling portion 120 is provided around the inlet 111a of the body 111. As an example, the hanger coupling portion 120 is provided around the inlet 111a of the body 111 and is configured such that, when it is coupled to a backrest coupling portion 220 to be described below, a first vent 211 of the backrest 210 and the inlet 111a of the body 111 can communicate with each other.

The seat 200 includes a backrest 210 and a backrest coupling portion 220.

The backrest 210 is a part that supports the back of a person seated in the seat 200, and a first vent 211 is formed on the rear surface and a second vent 212 is formed on the front surface. The first vent 211 and the second vent 212 function as passages through which air generated by a blower 213 provided inside the backrest 210 is discharged. Further, an intake hole for supplying air to the blower 213 may be formed at the lower portion of the rear surface of the backrest 210.

The first vent 211 can be opened and closed by a plurality of blades 214 installed in parallel in the up-down direction. As an example, the plurality of blades 214 can be configured to rotate in the up-down direction in place and can be rotated manually. In this configuration, when the blades 214 are positioned perpendicular to the ground, the first vent 211 is closed, and when the blades 214 are positioned parallel to the ground, the first vent 211 is opened.

Since the blower 213 includes the first vent 211 that discharges air toward the rear side of the backrest 210 and the second vent 212 that discharges air toward the front side of the backrest 210, it is possible to discharge air in two directions using one blower 213, so that both a rear-seat blowing effect and a ventilated-seat effect can be obtained at the same time.

Further, the blower 213 can be firmly fixed inside the backrest 210 using a bracket B.

The backrest coupling portion 220 is provided around the first vent 211. As an example, the backrest coupling portion 220 may be provided above and below the first vent 211. The backrest coupling portion 220 and the hanger coupling portion 120 can be configured to be coupled to each other using a magnet.

When the hanger part 110 is coupled to the backrest 210, air discharged from the first vent 211 of the backrest 210 flows into the inlet 111a of the body 111 and is discharged through the outlet 112a of the leg 112.

Further, the seat 200 may further include a controller 240.

The controller 240 is provided on the rear surface of the backrest 210 and can control the plurality of blades 214. As an example, the controller 240 is located around the first vent 211, and can adjust opening and closing of the first vent 211 by controlling the plurality of blades 214 using an actuator (not shown). When the hanger 100 is coupled to the seat 200, the controller 240 can open the first vent 211 by rotating the plurality of blades 214 to be parallel to the ground. On the contrary, when the hanger 100 is separated from the seat 200, the controller 240 can close the first vent 211 by rotating the plurality of blades 214 to be perpendicular to the ground.

Further, the controller 240 enables a person seated in the rear seat to use a blowing function by opening the first vent 211 by rotating the plurality of blades 214 to be parallel to the ground with the hanger 100 separated from the seat 200.

Further, the controller 240 can adjust the intensity of the airflow that is supplied from the blower 213.

Further, the hanger 100 may further include a sterilizing lamp (not shown), a heating wire (not shown), and a power terminal 130.

The sterilizing lamp is provided on the leg 112 and serves to sterilize the clothing hung on the hanger 100.

The heating wire is provided inside the hanger part 110 and serves to heat the air that is supplied from the first vent 211 of the backrest 210.

The power terminal 130 is provided on the body 111 and can be supplied with power for operating the hanger 100 with the hanger 100 coupled to the seat 200. Further, signals for operation control can be transmitted to and received from the seat 200 through the power terminal 130.

Further, the seat 200 has a power terminal 230 that is brought into contact with the power terminal 130 of the hanger 100 to supply power and transmit/receive signals.

Further, the backrest 210 may further include a storage recess 215.

The storage recess 215 is provided on the rear surface of the backrest 210 and is located below the first vent 211, and is formed to be able to store a fragrance.

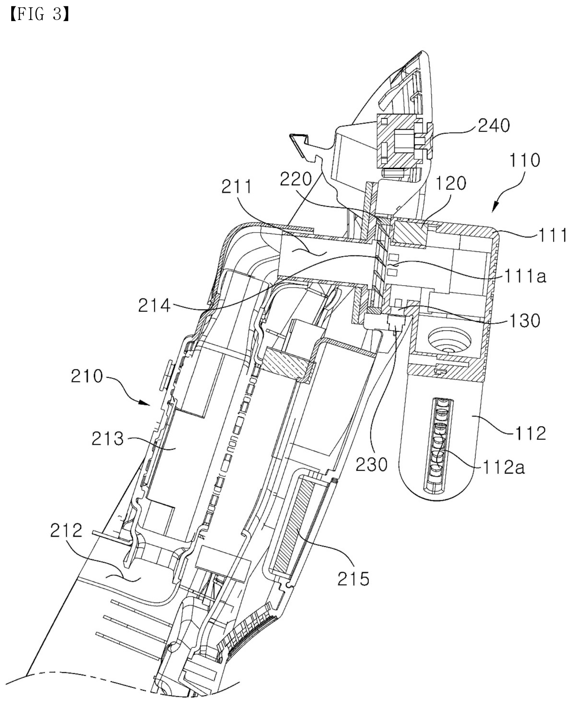

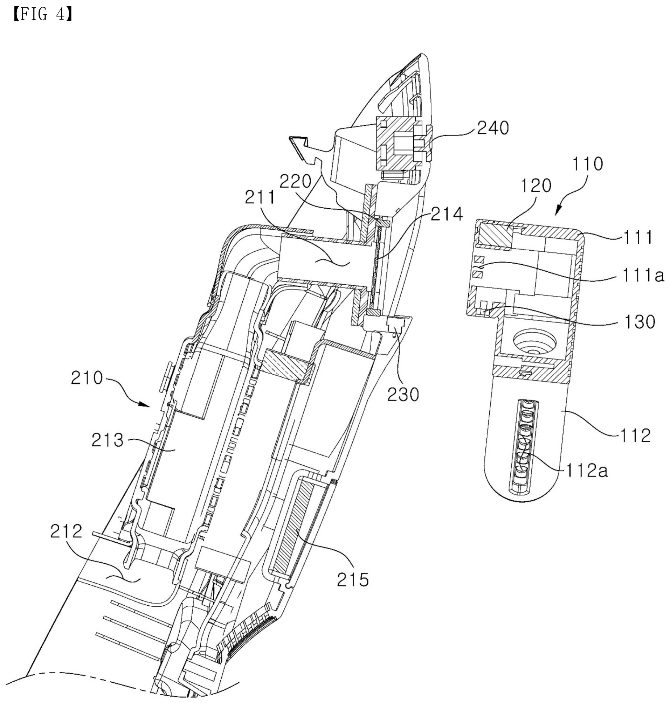

The operation of the clothing care system 10 for a vehicle is described with reference to FIGS. 3 and 4 that illustrate cross-sectional views of the clothing care system 10 for a vehicle.

FIG. 3 illustrates a closed mode of the clothing care system 10 for a vehicle.

The closed mode indicates the state in which the first vent 211 is closed and air is not discharged toward the rear surface of the backrest 210.

Specifically, when the hanger coupling portion 120 of the hanger 100 is separated from the backrest coupling portion 220 of the seat 200, the controller 240 can close the first vent 211 by rotating the plurality of blades 214 to be perpendicular to the ground. As a result, when the hanger 100 is not coupled to the seat 200, air can be prevented from being discharged from the first vent 211 of the backrest 210.

FIG. 4 illustrates an open mode of the clothing care system 10 for a vehicle.

The open mode indicates the state in which the first vent 211 is opened and air supplied from the blower 213 can be discharged to the outlet 112a of the hanger part 110.

Specifically, when the hanger coupling portion 120 of the hanger 100 is coupled to the backrest coupling portion 220 of the seat 200, the controller 240 enables the first vent 211 of the backrest 210 and the inlet 111a of the body 111 to communicate with each other by rotating the plurality of blades 214 to be parallel to the ground. As a result, the air supplied from the blower 213 is discharged to the first vent 211 of the backrest 210 and then supplied to the inlet 111a of the body 111, and is discharged to the outlet 112a of the leg 112.

Further, it is also possible to use the system such that air is supplied to a person seated in the rear seat by separating the hanger 100 from the seat 200, manually rotating the plurality of blades 214 to be parallel to the ground, and then making air be discharged from the first vent 211 of the backrest 210.

### Clothing Care System (20) For Vehicle According To Another Embodiment

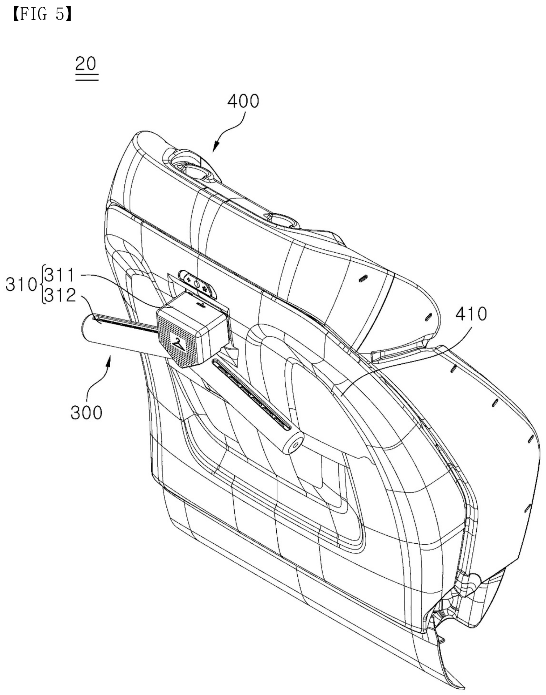

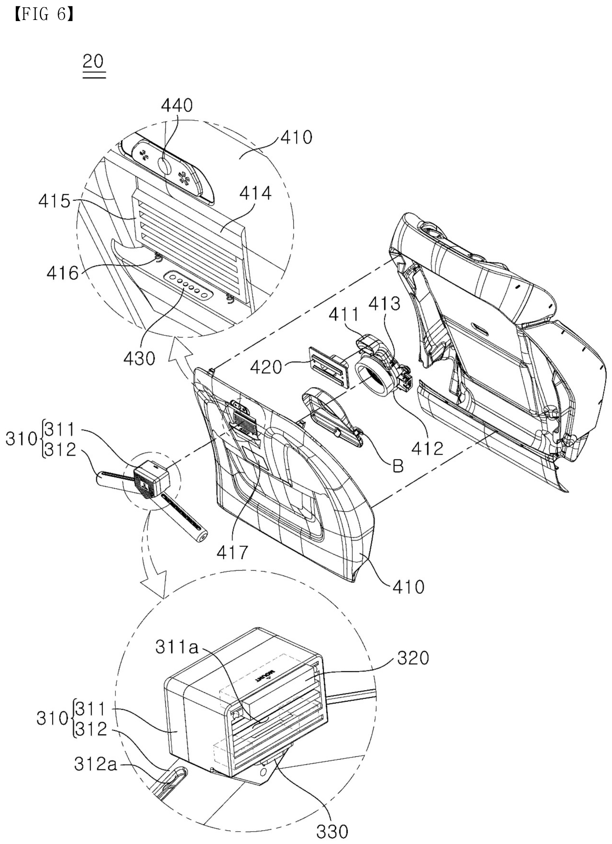

Referring to FIG. 5 that is a perspective view of a clothing care system 20 for a vehicle according to another embodiment (hereafter, referred to as "clothing care system 20 for a vehicle") and FIG. 6 that is an exploded view of the clothing care system 20 for a vehicle, the clothing care system 20 for a vehicle includes a hanger 300 and a seat 400.

The hanger 300 is coupled to the rear surface of the seat 400 by a backrest coupling portion 420 to be described below, and includes a hanger part 310 and a hanger coupling portion 320.

The hanger part 310 has an inverted-V shape and is composed of a body 311 that corresponds to a central portion and legs 312 that correspond to a leg portion. Further, the legs 312 are hinge-coupled to be rotatable with respect to the body 311, so the hanger 300 can be stowed with minimized volume when it is not used.

An inlet 311a is formed on one side of the body 311 that is coupled to the rear surface of a backrest 410 to be described below, and an outlet 312a is formed at the lower portion or at the upper and lower portions of the leg 312.

The hanger coupling portion 320 is formed to protrude around the inlet 311a of the body 311. As an example, the hanger coupling portion 320 is formed to protrude around the inlet 311a of the body 311 and is configured such that, when it is coupled to a backrest coupling portion 420 to be described below, a first vent 411 of the backrest 410 and the inlet 311a of the body 311 can communicate with each other.

The seat 400 includes a backrest 410 and a backrest coupling portion 420.

The backrest 410 is a part that supports the back of a person seated in the seat 400, and a first vent 411 is formed on the rear surface and a second vent 412 is formed on the front surface. The first vent 411 and the second vent 412 function as passages through which air generated by a blower 413 provided inside the backrest 410 is discharged. Further, an intake hole for supplying air to the blower 413 may be formed at the lower portion of the rear surface of the backrest 410.

The first vent 411 can be opened and closed by a first window 414 and a second window 415. As an example, the backrest 410 may include a first window 414, a second window 415, and an elastic member 416.

The first window 414 has a plurality of slats 414a spaced apart in parallel in the up-down direction, and is installed to be in contact with the first vent 411. A plurality of discharge holes 414b is formed in the first window 414 by the plurality of slats 414a.

The second window 415 has a plurality of slats 415a spaced apart in parallel in the up-down direction, and is installed to be slidable in the up-down direction in surface contact with the first window 414. A plurality of discharge holes 415b is formed in the second window 415 by the plurality of slats 415a. In this configuration, the plurality of slats 415a of the second window 415 has an area corresponding to the plurality of discharge holes 414b of the first window 414. Further, the second window 415 has, at its upper end, an inclined surface 415c that is inclined toward the upper end of the first window 414.

When the second window 415 is slid downward such that the plurality of slats 415a of the second window 415 is positioned parallel with the plurality of slats 414a of the first window 414, the first vent 411 can be opened.

Further, the elastic member 416 is provided at the lower end of the second window 415 and elastically supports the second window 415. When the second window 415 is slid downward, it can be slid upward again by the elastic member 416.

Since the blower 413 includes the first vent 411 that discharges air toward the rear side of the backrest 410 and the second vent 412 that discharges air toward the front side of the backrest 410, it is possible to discharge air in two directions using one blower 413, so that both a rear-seat blowing effect and a ventilated-seat effect can be obtained at the same time.

Further, the blower 413 can be firmly fixed inside the backrest 410 using a bracket B.

The backrest coupling portion 420 is provided around the first vent 411. As an example, the backrest coupling portion 420 may be provided above and below the first vent 411. The backrest coupling portion 420 and the hanger coupling portion 320 can be configured to be coupled to each other using a magnet.

Further, the seat 400 may further include a controller 440.

The controller 440 is provided on the rear surface of the backrest 410 and can slide the second window 415 in the up-down direction. As an example, the controller 440 is located around the first vent 411 and can adjust opening and closing of the first vent 411 by controlling the position of the second window 415. The controller 440 slides the second window 415 downward with the hanger 300 separated from the seat 400 such that the discharge holes 414b of the first window 414 and the discharge holes 415b of the second window 415 communicate with each other, whereby the first vent 411 can be opened. In this case, a person seated in the rear seat can use the blowing function.

Further, the controller 440 can adjust the intensity of the airflow that is supplied from the blower 413.

Further, the hanger 300 may further include a sterilizing lamp (not shown), a heating wire (not shown), and a power terminal 330.

The sterilizing lamp is provided on the leg 312 and serves to sterilize the clothing hung on the hanger 300.

The heating wire is provided inside the hanger part 310 and serves to heat the air that is supplied from the first vent 411 of the backrest 410.

The power terminal 330 is provided on the body 311 and can be supplied with power for operating the hanger 300 with the hanger 300 coupled to the seat 400. Further, signals for operation control can be transmitted to and received from the seat 400 through the power terminal 330.

Further, the seat 400 has a power terminal 430 that is brought into contact with the power terminal 330 of the hanger 300 to supply power and transmit/receive signals.

Further, the backrest 410 may further include a storage recess 417.

The storage recess 417 is provided on the rear surface of the backrest 410 and is located below the first vent 411, and is formed to be able to store a fragrance.

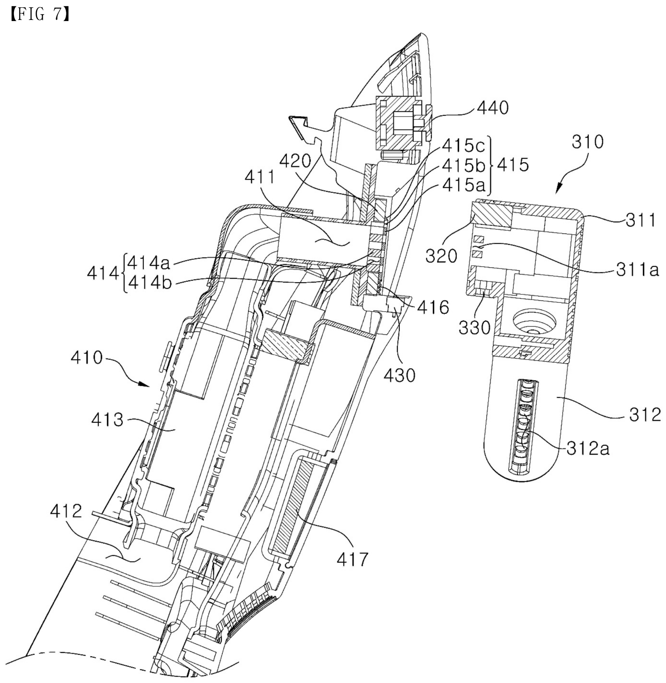

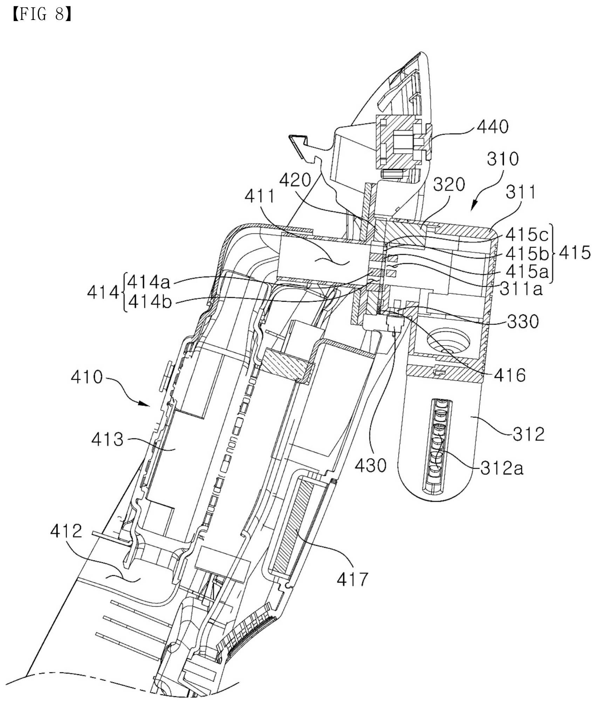

The operation of the clothing care system 20 for a vehicle is described with reference to FIGS. 7 and 8 that illustrate cross-sectional views of the clothing care system 20 for a vehicle.

FIG. 7 illustrates a closed mode of the clothing care system 20 for a vehicle.

The closed mode indicates the state in which the first vent 411 is closed and air is not discharged toward the rear surface of the backrest 410.

Specifically, when the hanger coupling portion 320 of the hanger 300 is separated from the backrest coupling portion 420 of the seat 400, the second window 415 is moved upward by the elastic member 416, whereby the slats 414a of the first window 414 and the slats 415a of the second window 415 are positioned out of alignment. As a result, air can be prevented from being discharged from the first vent 411 of the backrest 410.

FIG. 8 illustrates an open mode of the clothing care system 20 for a vehicle.

The open mode indicates the state in which the first vent 411 is opened and air supplied from the blower 413 can be discharged to the outlet 312a of the hanger part 310.

Specifically, when the hanger coupling portion 320 of the hanger 300 is coupled to the backrest coupling portion 420 of the seat 400, the protruding hanger coupling portion 320 pushes the second window 415 downward along the inclined surface 415c of the second window 415. As a result, the second window 415 is moved downward, and the slats 414a of the first window 414 and the slats 415a of the second window 415 are positioned in alignment. That is, the discharge holes 414b of the first window 414 and the discharge holes 415b of the second window 415 communicate with each other, so the air supplied from the blower 413 is discharged to the first vent 411 of the backrest 410, supplied to the inlet 311a of the body 311, and then discharged to the outlet 312a of the leg 312.

The expressions used to describe the embodiments of the present disclosure (such as terms and visualized images) are merely selected for the purpose of aiding understanding of the technology.

In addition, for convenience of explanation, the present disclosure has been described with a limited number of embodiments, and those skilled in the art will be able to devise new embodiments on the basis of the described embodiments without departing from a scope of the present disclosure.

Therefore, the claims of the present disclosure should not be limited by certain expressions shown in the "Description of the Invention" and the drawings, and should be interpreted broadly on the basis of the inherent spirit embodied throughout the specification.

## Claims

1. A clothing care system for a vehicle, the system comprising:
a hanger including a hanger part having an inlet formed in a body and an outlet formed in legs, and a hanger coupling portion provided around the inlet; and
a seat including a backrest in which a blower having a first vent formed on a rear surface and a second vent formed on a front surface is provided, and a backrest coupling portion provided around the first vent and configured to be coupled to the hanger coupling portion.

2. The clothing care system for a vehicle of claim 1, wherein the first vent is opened and closed by a plurality of blades installed in parallel in an up-down direction.

3. The clothing care system for a vehicle of claim 2, wherein the seat further includes a controller provided on a rear surface of the backrest and configured to control the plurality of blades.

4. The clothing care system for a vehicle of claim 1, wherein the hanger further includes:
a sterilizing lamp provided on the leg;
a heating wire provided inside the hanger part; and
a power terminal provided on the body for supplying power and transmitting and receiving signals.

5. The clothing care system for a vehicle of claim 1, wherein the hanger coupling portion of the hanger is formed to protrude,
the seat further includes:
a first window having a plurality of slats spaced apart in parallel in an up-down direction and installed in contact with the first vent;
a second window having a plurality of slats spaced apart in parallel in the up-down direction, installed to be slidable in the up-down direction in surface contact with the first window, and having an inclined surface formed at an upper end to incline toward the first window; and
an elastic member provided at a lower end of the second window, and
the first vent has:
an open mode in which, when the hanger is coupled to the seat, the second window is slid downward by the hanger coupling portion and the first vent is opened; and
a closed mode in which, when the hanger is separated from the seat, the second window is slid upward by the elastic member and the first vent is closed.
